# EUROPÄISCHE PATENTSCHRIFT

(11) **EP 1 786 744 B1**
(45) Veröffentlichungstag und Bekanntmachung des Hinweises auf die Patenterteilung: **02.01.2013**
(21) Anmeldenummer: 05782651.3
(22) Anmeldetag: 12.08.2005
(51) Int. Cl.: C04B 28/14, C04B 22/16

(54) **VERFAHREN FÜR DIE ABBINDEVERZÖGERUNG VON GIPS UND GIPSZUBEREITUNGEN**
METHOD FOR RETARDING PLASTER SETTING AND PLASTER PREPARATION
PROCEDE PERMETTANT LE RETARD DE PRISE DU PLATRE ET DES PREPARATIONS DE PLATRE

(30) Priorität: 24.08.2004 DE 102004040879
(43) Veröffentlichungstag der Anmeldung: 23.05.2007
(73) Patentinhaber: BK Giulini GmbH, 67065 Ludwigshafen (DE)
(72) Erfinder: STAFFEL, Thomas, 67269 Grünstadt (DE); LÖSCH, Sabine, 69502 Hemsbach (DE)
(86) Internationale Anmeldenummer: PCT/EP2005/008786
(87) Internationale Veröffentlichungsnummer: WO 2006/021332

(56) Entgegenhaltungen:
- EP-A- 1 106 588
- DE-A1- 2 023 853
- FR-A- 2 848 207
- US-A- 4 028 125
- US-A1- 2003 134 554
- US-B1- 6 228 163
- US-B1- 6 355 099
- US-B1- 6 406 537

## Beschreibung

Die vorliegende Erfindung bezieht sich auf ein Verfahren zur Abbindeverzögerung von Gips und Gipszubereitungen, sowie auf die Verwendung einer Zusammensetzung für dieses Verfahren.

### Gebiet der Erfindung:

Im Baugewerbe werden große Mengen an Gips und Gipszubereitungen verarbeitet. Zu den Baugipsen zählt man Stuckgips, Putzgips, die auch mit unterschiedlichen Zusätzen versehen sein können zur Erzielung bestimmter Eigenschaften.

Stuckgips ist ein β-Halbhydrat und wird im Wesentlichen zur Erzeugung von Gipskartonplatten, Gipsbauplatten, zum Herstellen von Innenputzen, wie Gipsputz u. a. verwendet.

Der Putzgips besteht aus Dehydrationsprodukten des Calciumsulfat-Dihydrates im Hoch - und Niedertemperaturbereich, insbesondere Anhydrit 11 und β-Halbhydrat. Auch dieser Gips wird für die Herstellung von Innenputzen verwendet. Er ist etwas vorteilhafter, weil er etwas langsamer abbindet und kann deshalb länger bearbeitet werden als Stuckgips.

Die relativ kurzen Abbindezeiten von Stuck- und Putzgips zwang den Verarbeiter schon früh, Additive zu finden, um an Ort und Stelle größere Mischungen hintereinander, ohne an kurze Taktzeiten gebunden zu sein, verarbeiten zu können.

### Stand der Technik:

Zur Verzögerung der Abbindung geeignete Substanzen wurden im Stand der Technik und in der Literatur beschrieben, z. B. von Kruis und Späth, Benz, Harvey und Neville (vergl.. Kunze, R. A., Thayer, A. G., Gypsum and Plaster Cem. Res. Prog. (1986), S. 267-283)

Der Verarbeitungszeitraum eines Gipses erstreckt sich zwischen Versteifungsbeginn (VB) und Versteifungsende (VE). Der Abbindeverlauf kann mit Hilfe der frei werdenden Hydratationswärme bestimmt werden. (obgleich indirekt und nicht exakt; siehe In Hans-Bertram Fischer, Martin Werner: Hydratationsverhalten von Gipsmischungen, Stuck, Putz, Trockenbau, 9/94 S. 16-22), sowie nach der Vicat-Methode, DIN 1168 Teil 2 oder mit Hilfe von Ultraschallmessungen, in Con. Chem. Journal, 4 Jahrgang 3/96.

Die bekannten Abbindeverzögerer lassen sich im Wesentlichen in drei Gruppen zusammenfassen:
a. Polymere/Copolymere auf Acrylatbasis, z.b. in der EP 1270 530 beschrieben
b. Diverse Phosphatsalze, z. B. in der US 5,746,822 beschrieben
c. Carbonsäuren- und Derivate z.b. in DE PS 22 26 943 beschreiben

In der DE PS 22 26 943 wird die Wirkung von organischen Substanzen vor allem organischen Fruchtsäuren, Weinsäure und Äpfelsäure auf den Abbindeverlauf von Gips beschrieben. Im Rahmen dieser Erfindung wurde gefunden, dass die Zugabe von 0,1 Gew. % Verzögerer bezogen auf die Menge des Gipses die Erstarrungszeit von mindestens um 10 Minuten verzögert. Es wird hier auch ein weiterer Zusatz, das polymerisierter Glyoxal, das in etwa gleichen Teilen der Mischung zugesetzt wurde, beschrieben. Die hier offenbarten Mischungen verzögern lediglich den Abbindebeginn des Gipses. Es ist jedoch erforderlich auch den Gesamtverlauf, d.h. sowohl Abbindeanfang, als auch Abbindeende zu steuern.

In Zement, Kalk, Gips, 1988, Seite 309 ff. wird die Verzögerungswirkung verschiedener Verbindungen In Abhängigkeit vom pH Wert des Gipses beschrieben. Es wurde festgestellt, dass die Abbindeverzögerung von Weinsäure und Weinsäuresalzen nur im hochalkalischen Bereich sehr gut ist. Die Weinsäure wurde hier in einer Dosierung von 0,2 Gew. % bezogen auf die Gipsmenge getestet. Mischungen mit Phosphaten wurden hier weder beschrieben, noch getestet.

In der DE 100 17 133 wird ein weiteres Verfahren zur Abbindeverzögerung von Gips und Gipszubereitungen bekannt gemacht, das dadurch gekennzeichnet ist, dass man eine Menge von 0,001 bis 1 Gew. % bezogen auf das Gewicht des Gipses, wenigstens eines Polymeren mit wiederkehrenden Succinyleinheiten zusetzt. Das Polymer kann eine Polyasparaginsäure oder ein Polysuccinimid oder eines ihrer Salze sein und es weist ein Molekulargewicht von 500 bis 10.000, bevorzugt 1000 bis 5000 auf. Die Wirkung dieser Polymeren ist sehr gut, die Differenz zwischen Abbindebeginn und Abbindeende beträgt bei einem reinen Beta-Halbhydrat in einer Dosierung von 0,03 Gew. % 25 Minuten.

Ein weiterer Abbindeverzögerer wurde in Zement, Kalk, Gips International, Nr. 9, 1999 bekannt gemacht. Die Wirkung von Imidodisuccinat als Verzögerer für Maschinenputzgips in einer Dosierung von 0,06 Gew.-% bezogen auf die Gipsmenge wird hier als sehr vorteilhaft beschrieben. Mischungen mit Phosphaten werden hier auch nicht erwähnt.

In diesem Zusammenhang wird noch auf die US Veröffentlichung US 20030100648 hingewiesen. In dieser Anmeldung wird die Verwendung eines Mittels beschrieben, das zur Verbesserung der Oberflächeneigenschaften eines abgebundenen Gipses /set gypsum containing material/ eingesetzt wird. Das hier verwendete Mittel besteht aus einer Mischung, die mindestens ein monobasisches Phosphat, ein Trimetaphosphat und ein Acrylpolyphosphat enthält. Als Aufgabe dieser Erfindung war die Verbesserung der Oberflächenhärte, Abriebfestigkeit und Wasserbeständigkeit der Gipsoberfläche. Diese Verbesserung kann offenbar nur dadurch erreicht werden, wenn es gelingt, die sog. Recalcination zu verhindern /inhibiting re-calcination /, was technisch die Rückbildung eines abgebundenen Gipses in die Halbhydrat-Form bedeutet. Dieser Vorgang ist mit der Verzögerung der Abbindung eines Halbhydrates nicht identisch. Als cyclisches Phosphat wird hier Natriumtrimetaphosphat eingesetzt. Das Natriumtrimetaphosphat wird in dieser Erfindung ausschließlich für die Lösung der oben genannten Aufgabe verwendet, die Verzögerung der Abbindung durch Natriumtrimetaphosphat ist nicht Gegenstand dieser Veröffentlichung.

In der US 5,746,822 wird eine Fugendichtmasse für Zement beschrieben, das auch Calciumsulfat Halbhydrat als Füllstoff enthält. Um die Verarbeitungszeit steuern zu können, enthält diese Masse weitere Zusätze unter anderem auch Phosphate, welche die Abbindung der Masse in Gegenwart von Wasser verzögern. In Anspruch 2 werden die zur Abbindeverzögerung geeigneten Phosphatsalze beschrieben, z. B. Zinkphosphat, Tetranatriumpyrophosphat, Natriumpolyphosphat, Monoammoniumphosphat und monobasisches Kaliumphosphat. Ein cyclisches Natriumtrimetaphosphat ist hier nicht erwähnt oder beansprucht.

In der US 6,342,284 wird die Herstellung von Gipskartonplatten beschrieben. Die Aufgabe dieser Erfindung bestand darin, die mechanische Stabilität der Gipskartonplatten unter Dauerbelastung zu verbessern. In dieser Erfindung wurden unterschiedliche Phosphatsalze getestet. Es wurden Gipsmischungen, die sowohl Calciumsulfat Halbhydrat, Calciumsulfat Dihydrat und auch Anhydrit enthalten in Kombination mit den unterschiedlichen Phosphatsalzen hergestellt. Gemäß Beispiel 1 wurden Gipsmischungen hergestellt, unter anderem auch mit Sodiumtrimetaphosphat /STMP/. In der Tabelle 1 wurde die Druckfestigkeit der Produkte untersucht. Es wurde gefunden, dass die Zugabe von STMP eine besonders gute Wirkung hatte in Bezug auf die Druckfestigkeit der Platten. In der Tabelle 2 wurde mit den Mischungen die mechanische Stabilität der mit diesen Gipsmischungen hergestellten Platten getestet. Auch hier war die Mischung, die STMP enthielt, besonders gut. Die Gipsplatten wurden in einer weiteren Testreihe nachträglich /post treatment/ Lösungen von STMP behandelt. Die Lösungen wurden auf die Calciumsulfat Dihydrat Oberfläche aufgesprüht und erneut getrocknet. In der Abbildung 5 kann man die hervorragende Wirkung von STMP in Bezug auf die sag deflection, d.h. die Biegefestigkeit der Platten sehen. Obwohl STMP in einer Reihe von mechanischen Tests der Platten sehr gut abgeschnitten hat, wurde festgestellt; Spalte 4, Zeilen 42 ff., dass STMP keine abbindeverzögernde Wirkung aufweist, d.h. die Umwandlungsrate von calciniertem Gips in Calciumsulfat Dihydrat nicht steigert. Damit war diese Wirkung aus dieser US 6,342,284 nicht entnehmbar, im Gegenteil diese Wirkung wurde sogar ausdrücklich verneint.

Aus US B1-6 406 537 ist ein Fugengips mit mehreren Zusätzen bekannt darunter auch Natriumtrimetaphosphat als Mittel zur Steigerung der Festigkeit und Weinsäure, welche zur Kontrolle de Abbindezeit zugesetzt wurde. Die erfindungsgemäße Kombination ist dieser Schrift nicht entnehmbar.

In DE 20 23 853 A1 wurde eine Gipsmischung für Gussformen offenbart mit folgenden Zusätzen: Kalium-NatriumTartat zur Kontrolle der Ausdehnung, Natriumtrimetaphosphat, welche ebenfalls die Festigkeit und die Saugrate kontrolliert, sowie Weinsäurea als Abbindeverzögerer. Auch hier wurde die erfindungsgemäße Kombination nicht offenbart.

In EP A-1 106 588 wurde ein Verfahren zur Umwandlung von Anhydrit III in Halbhydrat in gebranntem Stuckgipspulver beschrieben. Dabei wurden Natriumtripolyphosphat, Natriumtrimetaphosphat, eine org. Carbonsäure mit mind. 4 C-Atomen, z.B. die Weinsäure, der Mischung zugesetzt. Auch hier wurden die erfindungsgemäße Kombination, sowie die mengenmäßigen Anteile, nicht offenbart.

In US-B1 6 355 099 wurde die Herstellung einer Gipsmischung beschrieben unter Verwendung von Weinsäure und Natrium-Tartrat als Abbindeverzögerer, sowie Tetranatriumpyrophosphat als Verdickungsmittel und Natriumtrimetaphosphat zur Verbesserung der Grünstandsfestigkeit beschrieben. Auch hier ist die erfinderische Kombination zur Abbindeverzögerung nicht beschrieben.

Die Aufgabe der vorliegenden Erfindung bestand darin, einen weiteren wirksamen Abbindeverzögerer für Gipse und Gipszubereitungen, wie Maschinenputzgips, Gipshandputz, REA Gips und auch Naturgips, zu finden.
Weiterhin war eine Aufgabe, die bekannten Standardverzögerer, wie Weinsäure oder Polyphosphate, durch weitere wirksame Produkte zu vervollständigen oder zu ersetzen. Eine wesentliche Aufgabenstellung war vor allem, den Verlauf der Abbindung, insbesondere das Abbindeende besser steuern zu können. Dem Verarbeiter sollte mehr Zeit für die Verarbeitung zur Verfügung stehen.
Ausgehend von den oben näher beschriebenen technischen Lösungen, war es umso überraschender, dass die Erfinder der vorliegenden Erfindung festgestellt haben, dass es möglich ist, den Standardverzögerer Weinsäure mit einer Phosphatsalzmischung zu kombinieren, wobei einerseits die Weinsäuremenge deutlich reduziert werden konnte, aber andererseits gelungen ist, den Abbindeverlauf, insbesondere das Abbindeende zu steuern, hier speziell den charakteristischen Kurvenverlauf während der Abbindung zu verflachen. Damit bleibt für den Verarbeiter eine längere Zeitspanne gegen Ende des Abbindevorganges für die Verarbeitung offen.

Das vorliegende erfinderische Verfahren ist dadurch gekennzeichnet, dass für die Verzögerung der Abbindung von Gips und Gipszubereitungen, eine Zusammensetzung, die aus den Komponenten besteht, eingesetzt wird
a. Weinsäure in einer Menge von 0,01 bis 1,0 Gew.-% bezogen auf die Gipsmenge
b. Natriumtrimetaphosphat in einer Menge von 0,05 bis 0,5 Gew.-% bezogen auf die Gipsmenge
c. Natriumpolyphosphat, mit einer durchschnittlichen Kettenlänge von 4 bis 50 Phosphateinheiten und einem Mengenanteil von 0,01 Gew. % bezogen auf die Gipsmenge

Die Komponenten b und c, werden miteinander trocken vermischt und als feinteiliges Pulver in einer Korngroßenverteilung in der mind. 95 % der Bestandteile kleiner als 200 µm aufweist, dem zu verzögernden Gips zugesetzt. Der Gips wird dann in der üblichen Art mit Wasser gemischt oder angemacht und weiterverarbeitet.
Die Auswahl des Natriumtrimetaphosphates aus der Fülle der bekannten Phosphate ist neu und besonders erfinderisch. Bei der Lösung der gestellten Aufgabe, einen weiteren phosphathaltigen Abbindeverzögerer zu finden, konnten die Erfinder keinerlei Anregungen aus den bekannten Erfindungen entnehmen.

Die Komponente c ein Natriumpolyphosphat, ist ein kondensiertes Phosphat mit einer Kettenlänge von 4 bis 50, d.h. 4 bis 50 Phosphateinheiten sind miteinander linear verbunden.
Die erfindungsgemäß zu verwendende Verbindung ist Natriumtrimetaphosphat mit der allg. Formel (Na₃(P₃O₉), ein cyclisches Phosphat mit der CAS Nr.: 7785-84-4 und ist im Handel und auch von BK Giulini GmbH unter der Typenbezeichnung Targon erhältlich.
Durch den Zusatz von Natriumtrimetaphosphat wird die offene Zeit bei der Verarbeitung des Gipses beträchtlich verlängert. Diese Wirkung wurde in anwendungstechnischen Versuchen getestet. Die Ergebnisse werden nachfolgend präsentiert.

Anwendungstechnische Versuche und Ergebnisse:

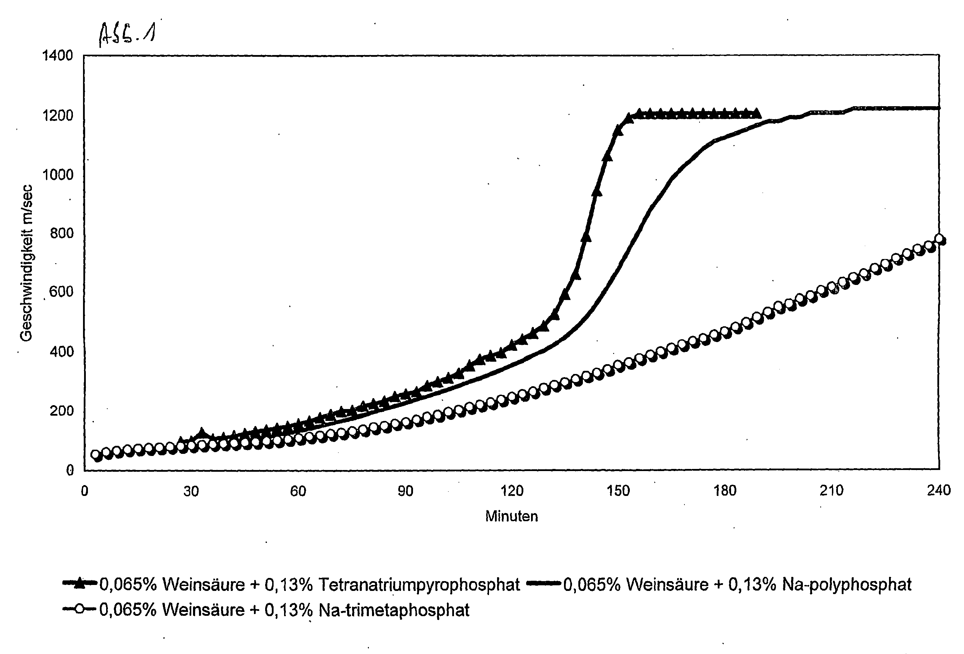

### Beispiel 1, Abbildung 1:

Bei diesem Versuch wurden 3 Mischungen in einem handelsüblichen Gips getestet:
1. 0,065 Gew.- % Weinsäure und 0,13 Gew.-% Tetranatriumpyrophosphat /Vergleich/
2. 0,065 Gew.- % Weinsäure und 0,13 Gew.-% Natriumpolyphosphat /Vergleich/
3. 0,065 Gew.-% Weinsäure und 0,13 Gew.-% Natriumtrimetaphosphat

Die Mischung 1 ist nicht geeignet, die offene Verarbeitungszeit Zeit ist zu kurz, der Kurvenverlauf ist zu steil. Bei der Mischung 2 ist die Verarbeitungszeit etwas länger, was man am flacheren Kurveverlauf sehen kann. Ganz besonders gut geeignet ist die Mischung 3, wo der Kurvenverlauf flach ist und damit die Abbindeverzögerung am Abbindeende noch recht lang ist. Die Mischung 3, enthaltend Natriumtrimetaphosphat erreicht hiermit das beste Ergebnis.

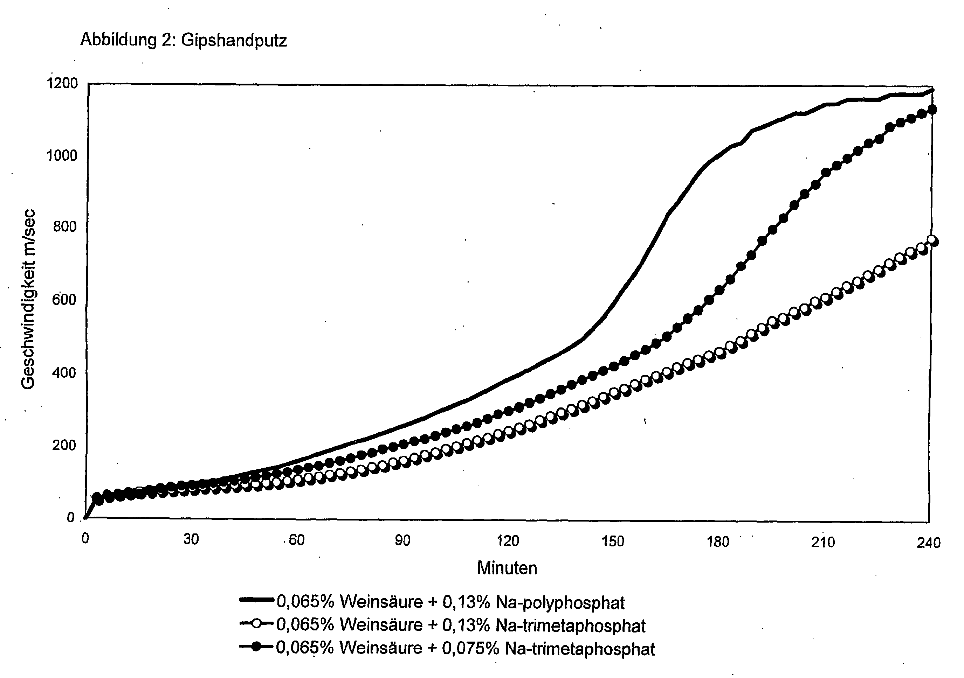

### Beispiel 2, Abbildung 2

In diesem Versuch wurde Gipshandputz mit je 3 unterschiedlichen Abbindeverzögerer Zusammensetzungen vermischt.
1. 0,065 Gew.- % Weinsäure und 0,13 Gew.-% Natriumpolyphosphat
2. 0,065 Gew.- % Weinsäure und 0,13 Gew.-% Natriumtrimetaphosphat
3. 0,065 Gew.-% Weinsäure und 0,075 Gew.-% Natriumtrimetaphosphat

Wie dieser Versuch zeigt, ist die Mischung 2 sehr gut geeignet, aber auch bei Reduktion der Natriumtrimetaphosphat Menge um 40 %, ist das Ergebnis immer noch besser, als die Ergebnisse mit der Mischung 1.

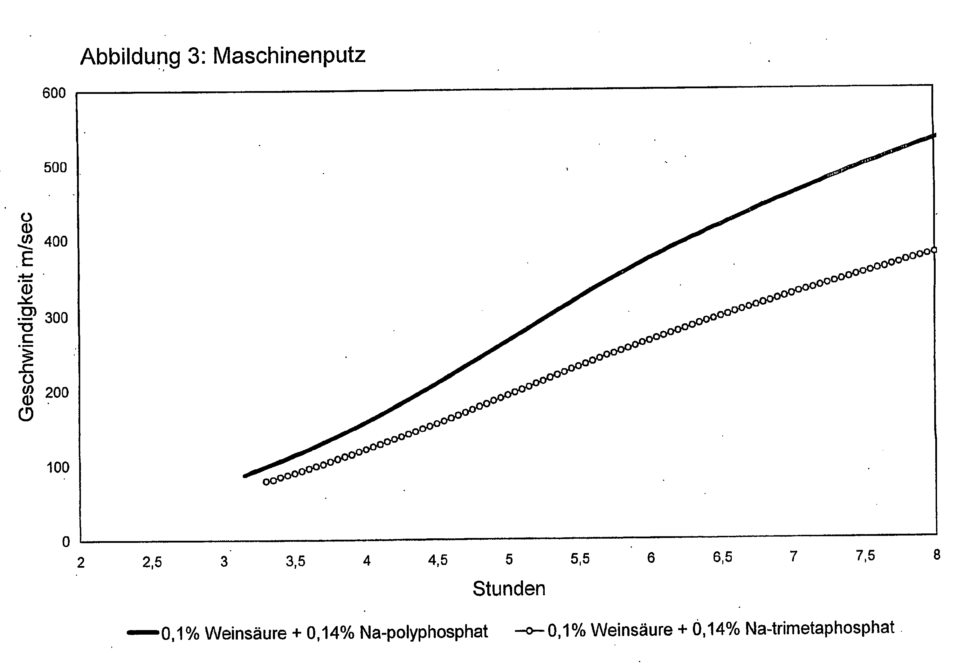

### Beispiel 3, Abbildung 3

Es wurde ein Maschinenputzgips mit 2 Mischungen jeweils vermischt und die Abbindung zeitlich untersucht.
1. 0,1 Gew.-% Weinsäure und 0,14 Gew.- % Natriumpolyphosphat
2. 0,1 Gew.-% Weinsäure und 0,14 Gew.-% Natriumtrimetaphosphat

Die Verzögerungswirkung von Natriumtrimetaphosphat ist im Vergleich bei gleicher Dosierung zu Natriumpolyphosphat deutlich besser.

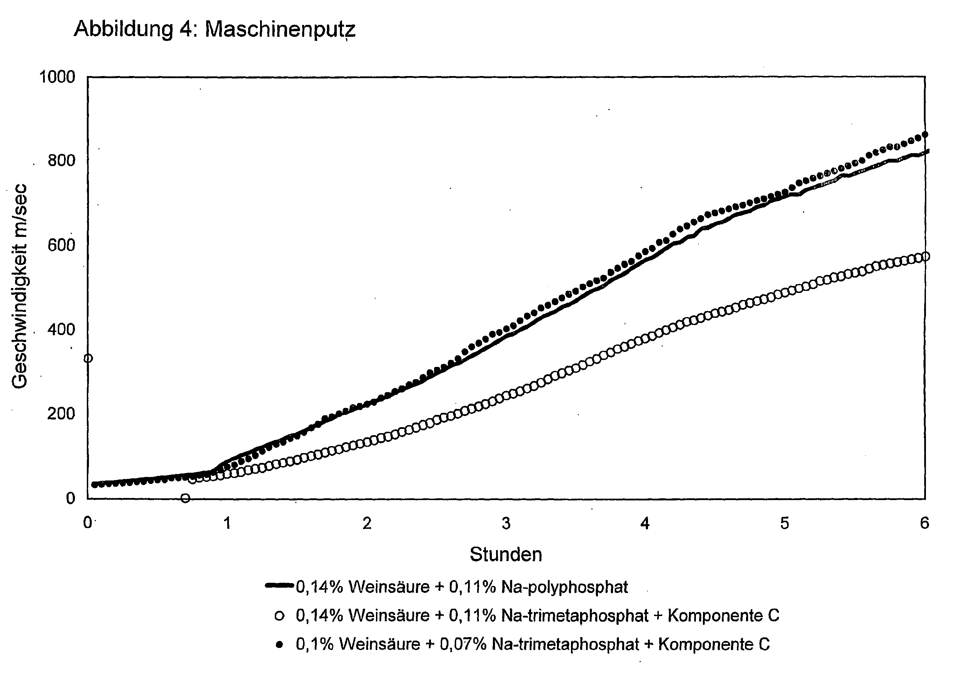

### Beispiel 4, Abbildung 4

Ein weiterer Test mit einem Maschinenputz wurde mit folgenden Mischungen durchgeführt:
1. 0,14 Gew.-% Weinsäure und 0,11 Gew.- % Natriumpolyphosphat
2. 0,14 Gew.-% Weinsäure und 0,11 Gew.-% erfindungsgemäße Phosphatsalz Kombination, wobei darin 0,033 Gew.-% Natriumpolyphosphat und 0,077 Gew.-% Natriumtrimetaphosphat enthalten sind
3. 0,1 Gew.-% Weinsäure und 0,07 Gew.-% erfindungsgemäße Phosphatsalz Kombination, mit 0,021 Gew.-% Natriumpolyphosphat und 0,049 Gew.-% Natriumtrimetaphosphat

In Kombination mit dem Verzögerer Weinsäure in einer Menge von nur 0,1 Gew.-% kann Natriumtrimetaphosphat sogar um 40% im Vergleich zur Menge des Natriumpolyphosphates reduziert werden und der Abbindeprozess ist, vor allem gegen Ende der Abbindezeit, dennoch optimal.

Die in dieser Erfindung verwendeten Phosphatsalze sind alle im Handel erhältlich.

Tetranatriumpyrophosphat hat die Formel Na₄P₂O₇, Natriumpolyphosphat die Formel NaₙPₙO₃ₙ₊₁, mit n = 4 bis 50 und Natriumtrimetaphosphat die Formel (NaPO₃)₃. Diese Phosphate sind unter anderem von der Anmelderin beziehbar. Sie sind sämtlich feinteilige Pulver.
Bei Natriumpolyphosphat handelt es sich um ein kondensiertes Phosphat, das durch thermische Kondensation unter Abspaltung von Wasser aus saueren Monophosphaten entsteht. Die im Rahmen dieser Erfindung verwendbaren Salze haben einen Kondensationsgrad n von n= 4 bis 50. Der Kondensationsgrad gibt an, wieviel P-Atome im Mittel pro Molekül vorhanden sind.
Natriumtrimetaphosphat ist ein ringförmiges Phosphat, das durch Abkühlen einer entsprechenden Polyphosphatschmelze und anschließendes Tempern oberhalb von 350 °C hergestellt wird. Das Herstellungsverfahren der Phosphate ist nicht Gegenstand dieser Erfindung.
Die Weinsäure hat die Formel: C₄H₆O₆ und chemische Bezeichnung 2,3 Dihydroxybutandiansäure oder auch 2,3 Dihydroxybernsteinsäuere. Sie tritt in 3 stereoisomeren Formen auf. Sie ist eine starke Säure und In Wasser gut löslich.
Im Rahmen dieser Erfindung wird die L-Form eingesetzt, die Verwendung der anderen Stereoisomeren ist technisch nicht möglich, diese Verbindungen sind nicht geeignet.

Die Messung des Abindeverlaufs geschieht mit der Ultraschallmethode.

Diese Methode beruht auf der Tatsache, dass die Schallgeschwindigkeit in der zu untersuchenden Mischung während des gesamten Hydratationsverlaufes stetig zunimmt. Die Messung ist zerstörungsfrei und kann auch in langen Messzeiträumen beliebig häufig vorgenommen werden. Das Ultraschallmessgerät eignet sich aus folgenden Gründen hervorragend für die Messung von Abbinde-Prozessen:
1. Nach dem Anrühren des zu untersuchenden Materials, beispielsweise Putz, Gips, Mörtel oder Beton, nimmt infolge der stetig zunehmenden Verfestigung die Schallgeschwindigkeit fortlaufend zu und mit dem Ende des Abbindevorganges nähert sie sich schließlich einem Grenzwert.
2. Das Gerät arbeitet mit einer Schallfrequenz von ca. 45 kHz, die für die Messung des relativ inhomogenen Materials besonders geeignet ist.
3. Das Gerät kann etwa 500 Messwerte speichern. Diese Werte können nach der Messung an einen PC übergeben werden und von PC als Tabellen oder Kurvendarstellungen ausgegeben werden.

Auf die weiterführende Literatur wird hiermit hingewiesen, vor allem auf die Aufsätze der Autoren T. Staffel, G. Brix, in "Untersuchungen des Abbindeverhaltens von Zementmischungen mit der Ultraschallmethode bei Einsatz verschiedener Verzögereradditive" in ConChem-Journal, 4. Jahrgang, 3/1996 und vom Autor J. Balau, ConChem-Journal, 2/1996.

## Patentansprüche

1. Verfahren für die Verzögerung der Abbindung von Gips und Gipszubereitungen, **dadurch gekennzeichnet, daß** eine Zusammensetzung eingesetzt wird:
a. Weinsäure in einer Menge von 0,01 bis 1,0 Gew.-% bezogen auf die Gipsmenge
b. Natriumtrimetaphosphat in einer Menge von 0,05 bis 0,5 Gew.-% bezogen auf die Gipsmenge
c. Natriumpolyphosphat, mit einer durchschnittlichen Kettenlänge von 4 bis 50 Phosphateinheiten und einem Mengenanteil von 0,01 Gew. % bezogen auf die Gipsmenge

2. Verfahren für die Verzögerung der Abbindung von Gips und Gipszubereitungen nach Anspruch 1, **dadurch gekennzeichnet, daß** die Komponenten b und c trocken vermischt und als feinteiliges Pulver mit einer Korngrößenverteilung in der mindestens 95 % der Bestandteile kleiner als 200 µm aufweist, dem zu verzögernden Gips zugesetzt wird.

3. Verwendung einer Zusammensetzung für die Verzögerung der Abbindung von Gips und Gipszubereitungen bestehend aus den Komponenten
a. Weinsäure in einer Menge von 0,01 bis 1,0 Gew.-% bezogen auf die Gipsmenge
b. Natriumtrimetaphosphat in einer Menge von 0,05 bis 0,5 Gew.-% bezogen auf die Gipsmenge und
c. Natriumpolyphosphat, mit einer durchschnittlichen Kettenlänge von 4 bis 50 Phosphateinheiten und einem Mengenanteil von 0,01 Gew. % bezogen auf die Gipsmenge, wobei die Komponenten in Form eines feinteiligen Pulvers dem zu verzögernden Gips und der Gipszubereitung zugegeben werden.

## Claims

1. Procedure for retarding the binding of plaster and plaster preparations, **characterised by** the fact that a composition is used:
a. tartaric acid in a quantity of 0.01 to 1.0 weight % with reference to the quantity of plaster
b. sodium trimetaphosphate in a quantity of 0.05 to 0.5 weight % with reference to the quantity of plaster
c. sodium polyphosphate with an average chain length of 4 to 50 phosphate units and a quantity proportion of 0.01 weight % with reference to the quantity of plaster

2. Procedure for retarding the binding of plaster and plaster preparations in accordance with claim 1, **characterised by** the fact that components b and c [are] mixed when dry and [are] added to the plaster to be retarded as a finely dispersed powder with a grain-size distribution, where at least 95% of the components [are] smaller than 200 µm.

3. Using a composition for retarding the binding of plaster and plaster preparations consisting of the components
a. tartaric acid in a quantity of 0.01 to 1.0 weight % with reference to the quantity of plaster
b. sodium trimetaphosphate in a quantity of 0.05 to 0.5 weight % with reference to the quantity of plaster, and
c. sodium polyphosphate with an average chain length of 4 to 50 phosphate units and a quantity proportion of 0.01 weight % with reference to the quantity of plaster, where the components are added to the plaster and plaster preparation to be retarded in the form of a finely dispersed powder.

## Revendications

1. Procédé de ralentissement de la prise de gypse et de mélanges de gypse, **caractérisé en ce qu'**est utilisée une composition :
a. d'acide tatrique d'une teneur de 0,01 à 1,0 %m en fonction de la quantité de gypse.
b. de trimétaphosphate de sodium d'une teneur de 0,05 à 0,5 %m en fonction de la quantité de gypse.
c. de polyphosphate de sodium avec une longueur de chaîne moyenne de 4 à 50 unités de phosphate et d'une teneur de 0,01 %m en fonction de la quantité de gypse.

2. Procédé de ralentissement de la prise de gypse et de mélanges de gypse selon la revendication 1, **caractérisé en ce que** les composants b et c sont mélangés à sec et ajoutés au gypse à ralentir sous la forme d'une poudre fine dont la taille des particules est, pour au moins 95 % d'entre elles, inférieure à 200 µm.

3. Utilisation d'une composition servant au ralentissement de la prise de gypse et de mélanges de gypse comprenant comme composants
a. de l'acide tatrique d'une teneur de 0,01 à 1,0 %m en fonction de la quantité de gypse.
b. du trimétaphosphate de sodium d'une teneur de 0,05 à 0,5 %m en fonction de la quantité de gypse.
c. polyphosphate de sodium avec une longueur de chaîne moyenne de 4 à 50 unités de phosphate et d'une teneur de 0,01 %m en fonction de la quantité de gypse, les composants étant ajoutés au gypse ou aux mélanges de gypse sous la forme d'une poudre fine.
